# EUROPEAN PATENT APPLICATION

(11) **EP 4 350 333 A1**
(43) Date of publication of application: **10.04.2024**
(21) Application number: 22199397.5
(22) Date of filing: 03.10.2022
(51) Int. Cl.: G01N 21/85, G01N 21/25, B07C 5/342

(54) **LIGHTING FOR AN OPTICAL MONITORING APPARATUS**

(71) Applicant: Bühler UK Limited, London E16 2BF (GB)
(72) Inventor: THURIN, Brice, London, SE9 1JX (GB); KELF, Timothy, Chelmsford, CM2 6EU (GB); LONDON, Nicholas, Chelmsford, CM1 4XG (GB); NEWMAN, Johnathan, London, EN10 7EX (GB)
(74) Representative: Page White Farrer

(57) **Abstract**

An apparatus for generating image data comprises an imaging device (11) for imaging material (4) moved through an imaging area (12) and a lighting unit (10) for illuminating the imaging area. The lighting unit comprises a source of light (15) and a freeform lens (14) configured to refract rays of light emitted by the source of light such that uniform illumination is provided for the imaging device across the imaging area. A freeform lens and a method for illuminating an imaging area of an imaging device are also disclosed.

## Description

This disclosure relates to apparatus and methods for producing lighting, and more particularly producing lighting for optical monitoring in industrial processes.

An industrial process can involve processing of large quantities of materials moving in the process. Monitoring of materials may be required at various stages of the process. Monitoring can be provided for various reasons and can be applied to a variety of materials. The materials can comprise anything from small granular matter to large particular matter. Non-limiting examples of materials include food substances, for example grains, pulses, nuts, fruits, vegetables, processed food products and so on, polymeric materials, metallic materials and wooden materials, mixed materials, waste materials, and any other physical matter that flows in a process.

Monitoring can be provided for the purposes of sorting materials and/or analysing materials. In this specification the term sorting covers a wide variety of material handling tasks that can be performed based on monitoring. For example, the sorting can cover any kinds of inspection, grading or categorisation, quality control, detection of defects, various analyses or assessments of materials, measurements such as measuring volume, quantity, moisture, and separation between organic and inorganic materials, for example when processing waste. Other property related parameters may also be monitored, e.g., colour, polymer type, damaged items and so on. There are numerous uses of sorting and the above examples are not an exhaustive list of sorting applications. Material analysing applications provide information, for example quality analysis and reports, of the monitored material.

Monitoring of materials can be performed by specific optical equipment configured for the tasks of sorting and analysis of bulk material. The monitoring may be provided based on signals from imaging apparatus, such as digital cameras or scanners, optical readers and so on imaging equipment. Optical sorters often use line-scan cameras with a viewing or imaging field / area that is typically less than a few millimetres wide and can be hundreds of millimetres long. Signals from the imaging apparatus can be input into a data processing apparatus for further processing and analysis. Appropriate process control actions may be taken based on the processing.

Optical equipment may require use of high-power broadband visible and infrared lighting. Currently the main types of light sources comprise incandescent halogen light bulbs and LEDs (Light Emitting Diodes). Similar to most light sources incandescent halogen light bulbs have isotropic emission. The lighting and detection systems are typically arranged such that lighting unit is located close to the objects to be monitored behind glass windows (either clear or frosted). Relatively low cost LED light sources are used for the visible light and halogen lamp in the infrared region.

Energy intensive halogen light sources are being phased out and replaced by LEDs. Hundreds of LEDs may need to be used to illuminate a single imaging area. Although multiple LEDs increase the light level on the line, camera systems with higher resolution are appearing and these can require even higher optical power. Multiple LEDs lights can also require complex light control units and filtering arrangements in order to provide even illumination.

Light sources typically have almost isotropic emission while the viewing area of a line-scan camera is typically less than a couple millimetres wide and a few hundred millimetres long. To produce a high enough irradiance on such small area, foreground illumination on optical sorting machine should be placed as close to the object as possible. Closeness to the objects may hinder access to the viewing area. Dust and other dirt from the objects may cause problems. Also, moving object may damage the equipment.

Two-dimensional concentrating optics such as reflectors have been used on optical sorters. The concentrating reflectors enable lighting to be located further away from the products. These reduce the amount of optical power required but are still highly inefficient. The area of illumination is more than three orders of magnitude larger than the camera viewing area or the actual imaging area. It is also technically challenging to produce an even illumination across the viewing area of the camera especially on multimodule machine.

Significant amount of optical and electrical power may be wasted in the process. Some of the wasted light can affect the noise level in the detection system through stray light, reflection and scattering. The additional optical power and spurious lights are a potential health and safety hazards. The low optical efficiency of current system described above is particularly problematic in application where the cost per milliwatt of optical power is high such as in the ultraviolet or infrared part of the spectrum. Heat may cause problem to the monitored materials and environment and/or health and safety issues.

The herein described aspects aim to address at least some of these issues.

According to an aspect, there is provided an apparatus for generating image data, the apparatus comprising an imaging device for imaging material moved through an imaging area, and a lighting unit for illuminating the imaging area, the lighting unit comprising a source of light and a freeform lens configured to refract rays of light emitted by the source of light such that uniform illumination is provided for the imaging device across the imaging area.

In accordance with another aspect there is provided a freeform lens for illuminating an imaging area of an imaging device configured for generating image data of material moved through the imaging area, wherein the freeform lens is configured to refract rays of light emitted by a source of light such that uniform illumination is provided for the imaging device across the imaging area.

In accordance with yet another aspect there is provided a method for optical monitoring, the method comprising imaging material moving through an imaging area by a digital imaging device, emitting light from at least one source of light, and refracting rays of light from the at least one source of light by means of at least one freeform lens to the imaging area such that uniform illumination for the imaging device is provided across the imaging area.

In accordance with a more specific aspect there is provided a freeform lens that is shaped to refract illumination across the imaging area such that uniform irradiance is provided across the imaging area.

A freeform lens may be shaped to refract illumination across the imaging area such that the imaging device provides uniform response with optimised efficiency across the imaging area.

A freeform lens may be shaped to compensate for detection losses at the edge areas of view of the imaging device by providing stronger illumination at the edge areas of the imaging area.

The imaging device and the lighting unit may be mounted into a single optical monitoring unit.

The casing of the optical monitoring unit can be closed. The casing can be provided with a viewing opening. The casing can be pressurised to prevent debris from entering the casing.

The apparatus may comprise at least two lighting units. The imaging device can be located between the freeform lenses of the at least two lighting units.

The imaging device may comprise a line-scan camera.

The lighting unit provided with a freeform lens may be configured to illuminate an area having width up to 50 mm and length in the range of 150mm to 600mm when the distance from the freeform lens is in the range of 150mm to 1200mm.

The apparatus may comprise at least one freeform lens shaped to provide a sharp illumination cut-off at the extremity of the imaging area.

The apparatus may comprise at least one freeform lens shaped to control illumination crosstalk with an adjacent imaging area and/or lighting unit.

The apparatus may comprise at least two lighting units for illuminating an imaging area, wherein the freeform lenses of the at least two lighting units are tailored so that the sum of the illumination from the freeform lenses of the at least two lighting units produce uniform irradiance or uniform response of the imaging device across the imaging area.

The apparatus may comprise a sorting apparatus and/or analysing apparatus configured for sorting and/or analysing bulk material moving through the imaging area based on image data generated by the imaging device. The apparatus may be configured to at least one of inspect, grade, separate, reject and produce a measurement and/or quality analysis and/or product stability analysis of the material based on the image data generated by the imaging device.

The apparatus may be configured to direct the lighting to material emerging from a chute or carried on a conveyor. The material may comprise at least one of one of organic material, raw material for food products, food products, granular polymeric material, wooden material, bulk dry commodities, waste material and/or metallic material.

In accordance with an aspect the light from the lighting unit is guided towards the imaging area by the at least one freeform lens configured to refract the rays of light such that the illumination is refracted across the imaging area to provide uniform irradiance across the imaging area. Illumination can also be refracted across the imaging area such that the imaging device provides uniform response with optimised efficiency across the imaging area. A sharp cut-off of the illumination at the extremity of the imaging area can be provided. Illumination crosstalk with an adjacent imaging area can be controlled. At least two lighting units can be used to provide a single uniform illumination area.

A freeform lens may comprise silicone.

A freeform lens can be composed of at least two optical elements. One or more refracting surfaces may be constructed within a lens. The lens may be formed of separate pieces. The elements can be of different materials. The elements can have different optical properties. Each element can provide at least one freeform surface. At least one optical element with at least one freeform surface may comprise materials such as glass, plastic and/or silicone.

A computer software product may be used for designing and producing the herein described lens component.

Some aspects will now be described in further detail, by way of example only, with reference to the following examples and accompanying drawings, in which:
Figure 1 shows a side view of a schematic example of a material processing system comprising an optical monitoring apparatus;
Figure 2 shows a plan view of a schematic example of a material processing system comprising an optical monitoring apparatus;
Figure 3 shows an example of uniform illumination provided across an imaging area;
Figure 4 shows an example of a monitoring apparatus assembly;
Figure 5 shows a schematic example of refraction of light rays by a three dimensional freeform lens formed according to the herein disclosed principles;
Figures 6A and 6B show perspective views of a freeform lens formed according to the herein disclosed principles;
Figures 7A and 7B show plan and sectioned views of another freeform lens formed according to the herein disclosed principles;
Figure 8 shows another example of a freeform lens;
Figure 9 shows a flowchart for operation according to an example; and

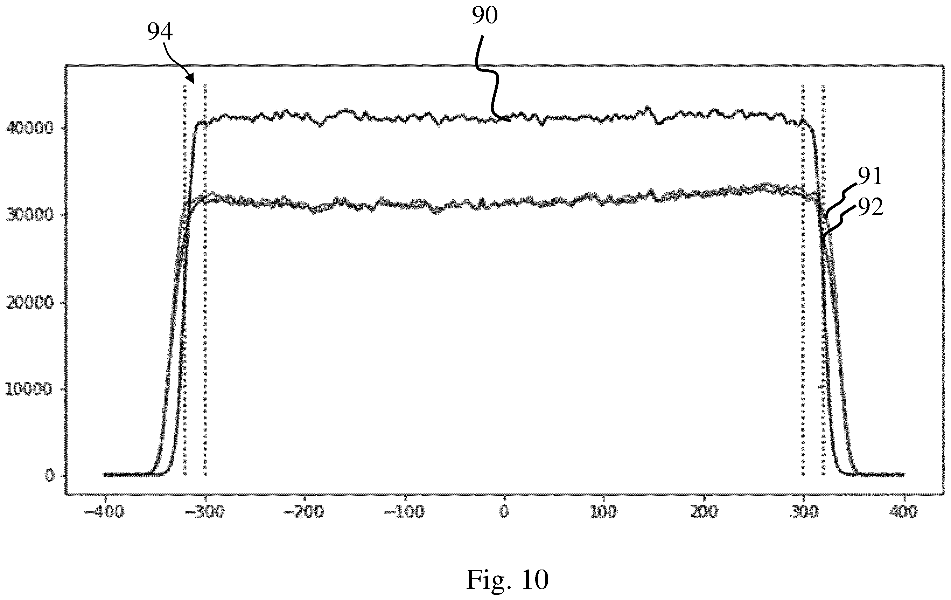

Figure 10 shows results of testing and simulations.

The following description gives an exemplifying description of some possibilities to practise the invention. Although the specification may refer to "an", "one", or "some" examples or embodiment(s) in several locations of the text, this does not necessarily mean that each reference is made to the same example of embodiment(s), or that a particular feature only applies to a single example or embodiment. Single features of different examples and embodiments may also be combined to provide other embodiments.

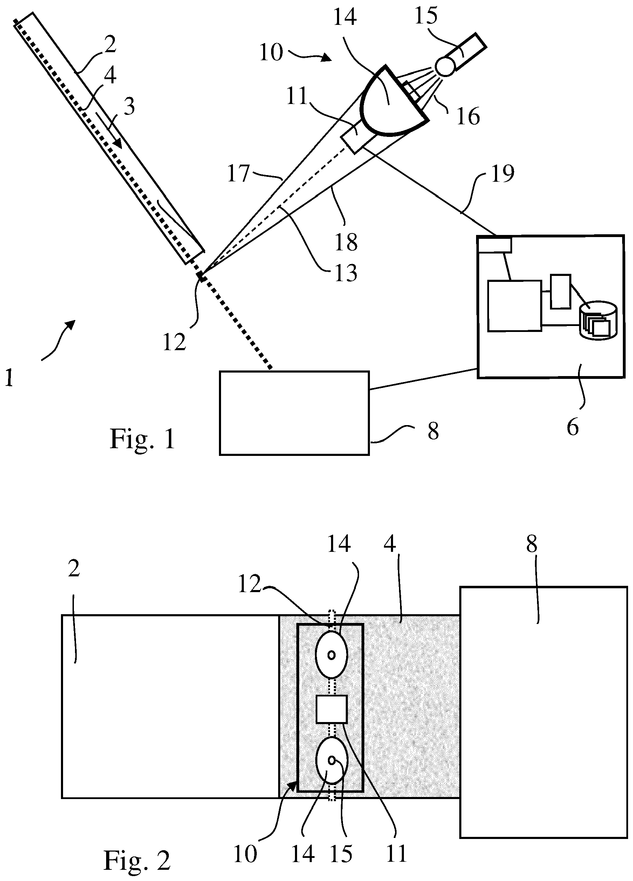

Figure 1 shows a side view of a schematic example of a material processing system 1 provided with an optical monitoring apparatus 10 configured to generate image data of material in an imaging area 12. An imaging device 11 is provided for imaging material moving through the imaging area 12. The line of sight from the imaging apparatus 11 to the imaging area 12 is denoted by the dashed line 13. Figure 2 shows a plan view of a processing system with similarly functioning components.

The processing system comprises a chute 2 guiding material 4 flowing through the system as indicated by arrow 3. The chute 2 guides the downwards moving material 4 towards a material processing apparatus 8. Instead of, or in addition to a chute, the processing system may comprise a conveyor or other apparatus for moving material in the system. The conveyor may comprise, for example, a belt conveyor or another conveyor where material can be moved and where an imaging area can be arranged to expose the material to the imaging device.

The material processing apparatus 8 is controlled by a controller system comprising a data processing apparatus 6. The material processing apparatus may process the material in various manners. For example, the material may be subjected to quality analysis and/or control actions where the material can be accepted / rejected by appropriate sorting equipment based on detected impurities, misshaped objects, defects, size, colour, variations, and so on. Monitoring may be used to assess product stability. Other non-limiting examples include grading or categorisation of materials where different grades or varieties of material are separated into different grades or categories based on control instructions from the control system. For example, food material, other biomaterial and/or waste material may be divided into different material streams by the material processing apparatus 8 configured for sorting the material.

The imaging device can comprise a digital camera 11. A particular example of the digital camera is a line-scan camera. In this example the imaging area 12 extends across the width of the flow of material 4 falling between the end of the chute 2 and the processing apparatus 8 which can provide, for example, a sorter facility.

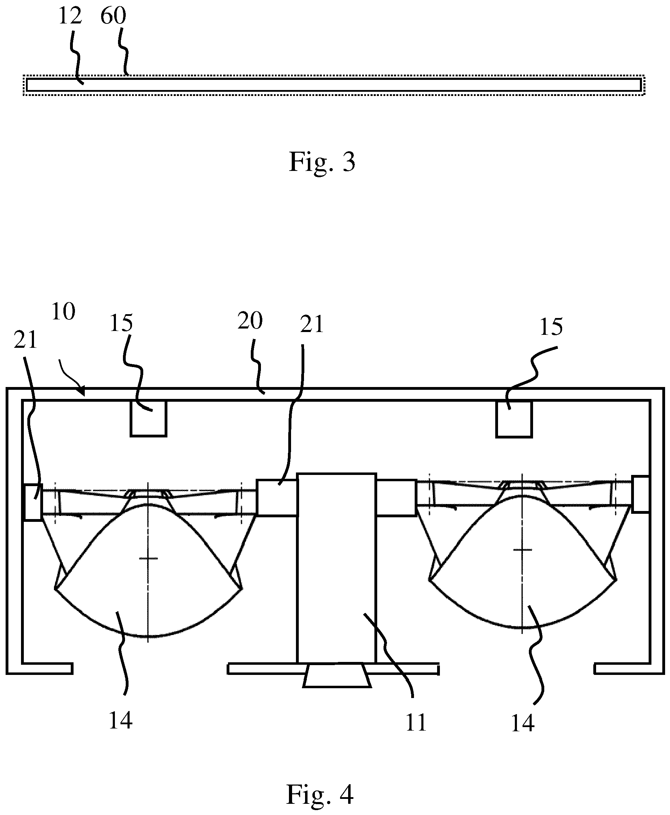

The term imaging area is used in this specification to refer to the field of view of the camera on the imaging plane. In line-scan applications the imaging area comprises a substantially narrow strip. An example of strip shaped imaging area 12 is shown in Figure 3. Narrow strips are used for imaging in line-scan applications for taking of direct 2D images of the imaging area which may extend across the width of the material flow, or only on a part of it.

In the example of Figure 1 the imaging area 12 comprises a narrow strip extending across the width of the material flow 4 emerging from the end of the chute 2. The camera is configured to image the entire length of the narrow imaging area so that all material 4 passing the monitoring apparatus 10 is imaged. The image captured by the optics of the camera is converted into a digital data signal for input into the data processing apparatus 6.

The camera 11 is connected via a data connection 19 to the data processing apparatus 6. The connection can be any suitable wired or at least partially wireless data connection. Data can be communicated from the camera based on any appropriate data communication protocol. The data processing apparatus 6 can comprise any suitable computer device configured to perform the monitoring, analysis and control functions required by process control. The data processing apparatus can comprise any appropriate computing arrangement comprising at least one processor, memory, software and internal circuitry and components necessary to perform the tasks configured to implement at least some of the herein described features. Figure 1 shows an example of internal components of a data processing apparatus arranged on a board and comprising processor(s) and memory or memories, and connections between the elements of the apparatus and an interface for connecting the data processing apparatus to the camera. The at least one processor may be configured to execute an appropriate software code to implement one or more of the following aspects. The software code may be stored in the at least one memory. The data processing apparatus 6 can be connected to / be a part of wider data communications system, such as an Intranet or the Internet. The data processing apparatus can be configured for monitoring and control of a large scale production facility such as a factory or a food processing plant. For example, the data processing apparatus can be configured for food mills, various types of food processing applications, recycling plants, different raw material processing facilities and so on. Functions of the data processor apparatus can be at least in part provided in a cloud or virtualized environment. Appropriate gateways can be provided between different environments.

The optical monitoring apparatus 10 further comprises two colinear lighting units each comprising a source of light 15 and a freeform lens 14. A freeform/anamorphic lens can provide tailored uniform illumination. The lighting units can thus tailor the illumination to illuminate an area with a limited spatial extent. Lines 17 and 18 in Figure 1 denote the extremes of the effective light rays emerging from the freeform lens 14 and guided by the shaping thereof to the imaging area 12 in a predefined manner. The light energy can be utilised uniformly across the imaging area 12. Light energy can be refracted precisely towards the far ends of the imaging area while preventing the rays from escaping at the sides of the conveyor 2.

In order to ensure the uniformity across the length of the imaging area 12, the freeform lens is shaped, and the light distribution can be optimised such that the optical energy is evenly distributed on the pixels across the line of sight of the camera. The provided illumination area can be configured to substantially match the imaging area 12. A freeform lens can be tailored to compensate for detection loss at the edge of the field of vision.

An optical monitoring apparatus can be provided with at least one tailored freeform lens enables arrangement where the lighting unit can be moved further from the material flow 4 whilst maintaining good optical power. This enables better access and easier cleaning of the machinery. This may also simplify the design of the monitoring arrangement.

More detailed description of the principles of freeform optics for the lens design and possibilities to design a freeform lens will be given later in this specification.

A freeform lens can be manufactured from plastic. Plastics comprise a wide range of synthetic or semi-synthetic materials that use polymers as a main ingredient. Plastics can be moulded, extruded and/or pressed into solid objects of various shapes. Plastic lenses can be used since low wattage light sources, such as low wattage LEDs, generate low levels of heat enabling use of plastics. Other materials may also be used for a freeform lens. A possibility is to manufacture a freeform lens from silicone, or more precisely from polymerized siloxanes or polysiloxanes. Glass can also be moulded to appropriate freeform shape. Silicone and glass lenses are of particular interest for ultraviolet (UV) and infrared (IR) applications. Silicone does not absorb UV light in the manner of plastics and therefore a lens made of silicone can be particularly advantageously used for fluorescence detection due to its properties enabling more UV light through the lens.

Lighting units provided with freeform lenses can be designed to create uniform illumination across the line of sight of the camera with sharp cut-off at each extremity so as to avoid cross-talk with adjacent modules. Figure 3 shows an example illustrating how an illuminated area 60 drawn by line of dots can be shaped to closely follow the extremes of the imaging area 12 drawn by solid line. In accordance with an example where a single source of light is provided to transfer the optical power to a segment of light, the length to width aspect ratio of the illuminated area covering the imaging area 12 can be in the range of about 10:1 to 60:1. To give an example, a strip-like illuminated area can measure about 600mm x 10mm or multiples thereof. In accordance with another example one or more lighting units can illuminate an area having width up to 50 mm and length in the range of 150mm to 600mm when the distance from the freeform lens can be in the range of 150mm to 1200mm. In certain applications the imaging area can be narrower than the illuminated area.

The source of light 15 may comprise for example one LED, or a multiple of LEDs. A halogen or incandescent bulb may also be used. In another implementation multiple bulbs can be provided.

Figure 4 shows a schematic view of a monitoring unit assembly 10 where two sources of light 15, respective two freeform lenses 14 and a camera 11 therebetween are mounted by fittings 21 to a frame 20 of the assembly. The mounting of the components relative to each other can be fixed during assembly of the unit such that the unit is ready for mounting relative to the processing apparatus. Components of the monitoring unit assembly can be pre-calibrated such that none, or only minimal amount of calibration is required at the site. The fittings 21 can allow for fine-tuning of the unit. A foreground lighting unit can thus be coupled through the frame with a camera such that these together constitute an integrated compact monitoring or detection unit assembly. This enables easy assembly. The light source, the lens and the camera of the unit can be preadjusted before assembly and the need for adjustment at the site can be removed or minimised. Within a single module, monitoring units can be placed sequentially without interfering with each other.

Fitting the camera inline on the same axis between two lighting units can also prove advantageous in that the line of sight from the camera is well aligned with the light from the lenses. Co-linear lighting with camera can be used to reduce shadowing artefacts.

It is noted that instead of an optical monitoring apparatus comprising two lighting units, an optical monitoring apparatus may comprise only one lighting unit or more than two lighting units. A lighting unit may comprise at least one freeform lens and at least one light source. Multiple light sources may be arranged in line formation above the lens. Other formations are also possible. The light of multiple lighting units can overlap or add up to form an even illumination across a single imaging area.

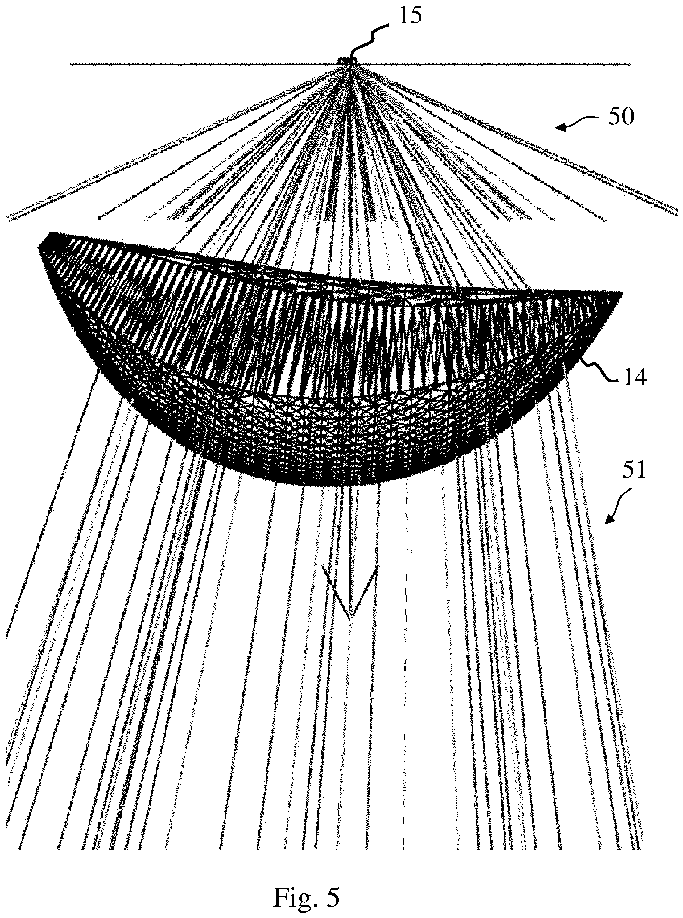

Figure 5 shows an illustrative example how light rays 50 emitted from a source of light 15 can be refracted by a freeform lens 14 into carefully designed pattern of light rays 51. A freeform or anamorphic lens 14 can be configured to provide tailored illumination to achieve better focus and control on the light. A lens geometry can be shaped to generate different distribution of the rays across the imaging area. Regardless of the selected design, the aim is to generate uniform mapping of the light energy in the rays to the plane of the imaging area, i.e., the lens in each case is designed such that the pixels on the imaging area receive uniform amount of light. The rays can be arranged to emerge from the lens in various patterns, for example in uncrossed diverging, crossed converging, crossed diverging, and/or uncrossed converging patterns. Any of these can be used for implementing the herein described lens designs.

By careful mapping a freeform lens design can be provided where there is no substantial variation in the amount of light received by each pixel across the imaging area whereby a good dynamic range of the optical system can be achieved. Flattened uniformity across the imaging area with a single light source, for example a single LED can thus be provided.

According to another possibility the uniformity is provided through compensating for the camera lenses detection losses at the edges of the camera lens by guiding more light energy at the edges of the imaging area. The lens shapes isotropic emission of an extended size light source and focuses the light into a concentrated, homogeneous segment shaped illuminated area. This can be used to increase the amount of light available in the imaging area of the camera, while reducing the overall energy used.

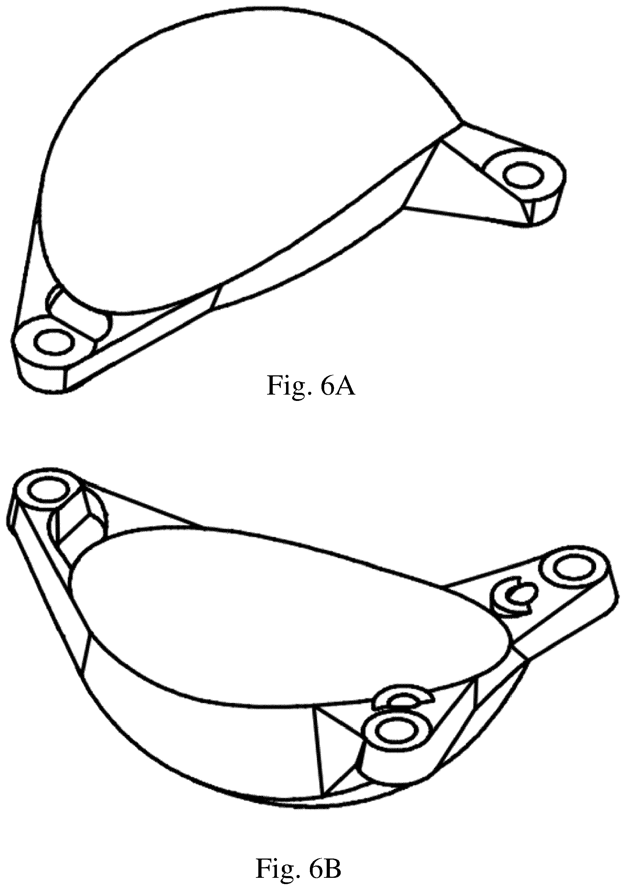

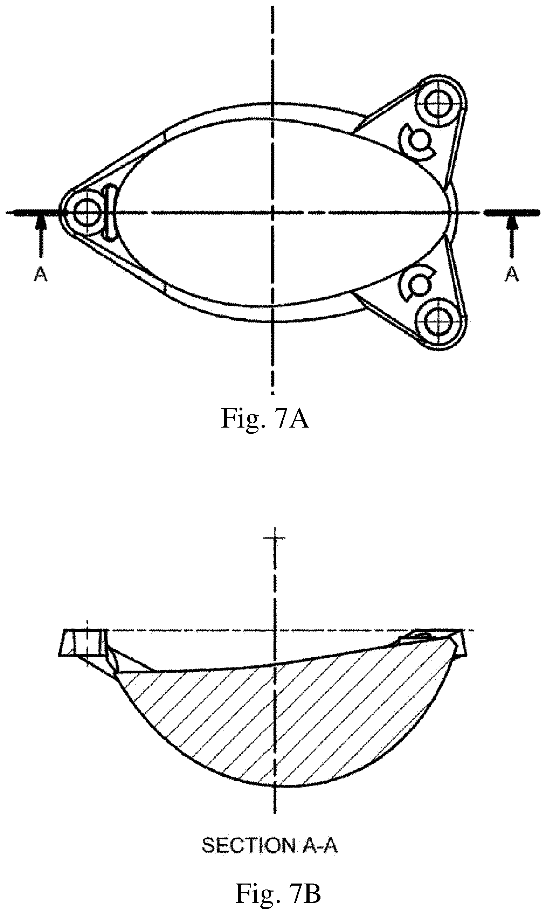

Figures 6A, 6B, 7A and 7B show examples of freeform lens designs. Figures 6A and 6B show perspective views of a freeform lens shaped to provide uniform illumination. Figures 7A and 7B show cross section of a freeform lens shaped to provide uniform illumination. The shown freeform lens is configured to tailor the shape of one of more surfaces thereof to redirect light rays emitted from the source of light in three dimensions to provide a desired illumination across the image captured by a camera.

A freeform lens having at least one 3-dimensional surface tailored to optimally direct light rays in positions of interest can be designed using software aided optimisation. A half ellipsoid with appropriate length, width and height can be used as a starting point of an iterative process. Information of the imaging area, the location and position of the ellipsoid and the source of light can be used as input. A software aided optimisation algorithm can be run on a computer for iteratively forming the shape of the lens surface until a shape is found that achieves the desired illumination across the imaging area. Both the input and the output surface can be shaped. A CAD/CAM model can be created for the designed shape and a freeform lens manufactured based on the model.

A lens can be composed of at least two optical elements. Each element can have at least one freeform surface. For example, a multi-elements freeform lens can be constructed such that two or more lens elements are cemented or assembled into a lens unit. A freeform lens can be constructed such that one or more refracting freeform surfaces are provided within a lens, e.g., by forming the lens of separate pieces. The elements can be of different materials and/or can have different optical properties. Such configuration may be used, for example, to compensate for chromatic defect for a broadband light source.

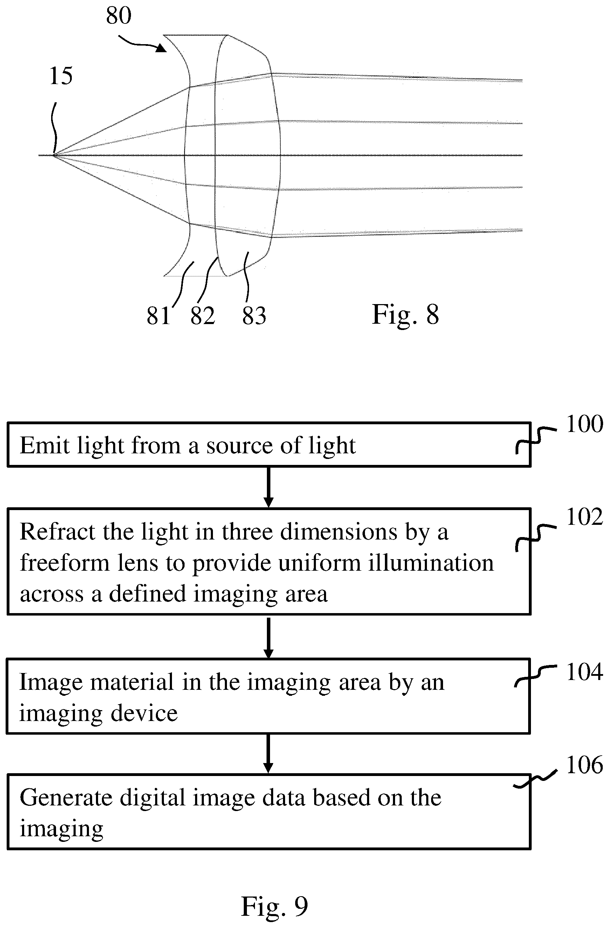

Figure 8 shows an example of a freeform lens 80 comprising more than one optical element. In the example light emitted from a light source 15 is entered into a first lens element 81 and then passed via an interface 82 between elements 81 and 83 to the second lens element 83.

Freeform optics constitutes a technology where freeform surfaces provide optical surfaces without linear or rotational symmetry. The freeform nature offers high degrees of design freedom, which can be used to avoid restrictions on lens surface geometry and create efficient designs. Design of lenses can be freed from restrictions of traditional optical surface geometry. Design methods of freeform illumination optics comprise zero-'etendue algorithms based on assumption of ideal source and design algorithms for extended light sources. The zero-'etendue algorithms include ray mapping methods, Monge-Ampere equation method, and supporting quadric method (SQM). The algorithms for extended sources include illumination optimization, feedback design, and simultaneous multiple surfaces method. Use of freeform surfaces can produce new designs that cannot be achieved by the use of spherical or aspherical surfaces.

The design of freeform illumination optics can be formulated as follows: given an input from a light source and an output from a lens as a prescribed illumination, one or multiple freeform surfaces are to be designed so that the light rays emitted from the light source are redirected to produce the prescribed illumination on the target surface which is an inverse problem. To give a more detailed example, a freeform lens can be designed using the SQM method in an intuitive manner. A predefined illuminance distribution can be assumed to be a continuous function defined on a domain. The domain is pixelated and a sample point is defined for each pixel. The amount of energy assigned at each sample point can be considered equal to the total energy contained in its corresponding pixel. The prescribed illumination problem is converted into a discrete illumination problem after pixelation of the domain. The discrete illumination problem can then be solved. The light rays emitted from a light source S are considered to be refracted by the ith surface patch to converge to point Ti on the target plane on the imaging area. The ith surface patch is an ellipsoidal interface, and the points S and Ti are the two foci of the ellipsoid. The total energy delivered by the ith surface patch is determined by the parameters of this ellipsoid. With a fixed focal length, it is possible to iteratively adjust the parameters of the ellipsoid (e.g., the length of the long axis) so that the total energy delivered by the ith surface patch to point Ti is equal to the prescribed value. For the discrete illumination problem, a set of ellipsoidal surface patches are computed and the number of the surface patches is equal to that of the sample points. The final freeform lens is composed of these surface patches. The SQM method can also be used to find a ray mapping of the ray mapping method.

The above is an illustrative example and there are several possible design methods that can be used to achieve a desired freeform lens design. More detailed description of these can be found from article by Wu, Rengmao, Zexin Feng, Zhenrong Zheng, Rongguang Liang, Pablo Benítez, Juan C. Miñano, and Fabian Duerr 'Design of Freeform Illumination Optics'. Laser & Photonics Reviews 12, no. 7 (July 2018): 1700310.

The generation and optimisation of the shape of a freeform lens can be done with the aid of a software product specifically configured for this purpose. A commercially available ray tracing software can be used to evaluate the performance of the design between iterations. Examples of such are commercially available software products such as Speos, Lightools, Tracepro, and Zemax

Figure 8 shows an example of a method using a three-dimensional (3D) freeform lens for optical monitoring of material. The shown method comprises emitting light from at least one source of light at 100. Rays of light emitted by the at least one source of light are refracted at 102 in three dimensions by means of at least one freeform lens towards an imaging area such that uniform illumination for an imaging device is provided across the imaging area. Material moving through the imaging area can then be imaged at 104 by a digital imaging device. Digital image data is generated by the camera at 106.

The image data can be used for various purposes. For example, a sorting apparatus can be operated based on control instructions generated in response to the image data.

Figures 1 and 2 show a system provided with a single optical monitoring apparatus comprising a single camera. A monitoring system can comprise more than one monitoring apparatuses, lighting units and cameras and respective imaging areas. These all may be connected to the control system / data processing apparatus 6. Multiple high power lighting units may be positioned close to each other or at least in sight such that these may cause interference. This can be addressed by shaping the freeform lenses of the lighting units to tailor the illumination to illuminate only the relevant imaging area with a limited spatial extent. The lighting can create a uniform illumination across the line of sight of the camera with sharp cut-off at each extremity so as to avoid crosstalk with adjacent monitoring modules. Cross talk can lead to limitations in equipment design and size, for example because of need of in-fill lighting. Tailoring of the shape of the freeform lenses can be used to mitigate the effects of cross talk and/or control the cross talk such that the distribution of illumination is uniform and is seen flat by the imaging device. Use of interacting lighting units can also be used to reduce the overall size and complexity of the system architecture.

Performance testing and simulations have been performed for optical monitoring systems comprising two freeform lenses configured according to the herein disclosed principles. Results of the simulations are shown in Figure 9 where curve 90 is for the blue colour band, curve 91 is for the green colour band and curve 92 is for the red colour band. The results show relatively flat curves within the imaging area, i.e., uniform illumination between the edge areas 94 of the imaging area denoted by dotted lines. Also, relatively sharp cut-offs of each colour band at the edges were detected. The following explains in more detail certain achievable benefits in the context of examples in relation to producing foreground lighting for an apparatus such as an optical sorter apparatus with a lighting arrangement as described herein.

A three dimensional (3D) freeform shaped lens can increase lighting efficiency. The 3D shape of the lens can be optimized in a way that the irradiance is the same at any point along the length of the viewing area for a camera. The illumination on the imaging area can be provided in smaller segments. Use of 3D freeform lens can be provided such that the light emitted from a source of light is concentrated into a segment defined within an imaging area. In general, improved homogeneity of the lighting across the viewing area may be provided, thus improving the accuracy of the imaging and the results of the analysis.

In accordance with a possibility multiple lighting units comprising at least one light source and lens each can be arranged to cover the length of the imaging area. By using a number of cooperative lighting units the total power can be increased while maintaining flat response across the area.

A lighting unit comprising a freeform lens and source of light can be designed to specific requirements of various monitoring applications. A lighting unit can be tailored to convert a point light source or an extended light source to an area of illumination which can have any specific shape and/or conditions affecting imaging. Simple spectral and spatial tailoring of illumination can be provided in applications where all light is provided by a single source of light. Controlled spatial brightness may be achieved. A lesser amount of LEDs requires less filtering and may enable use of a smaller filter or lesser amount of filters. A system of colour dispersion compensation scheme can be arranged so as to provide a flat spectra across the illuminated area.

The tailored freeform lenses can also be used in overall management of heat generated by high power lighting. The freeform lenses allow reduction in the number of light sources for the same final image plane irradiance compared to a line of light sources. Reduced heat may also avoid failures caused by excessive heat. Reducing the amount of heat generated can be important, e.g., for safety and product quality reasons. Reduction of heat generated by the lighting assembly and/or within the enclosure of the lighting unit is considered an important benefit.

The foreground illumination generating lighting unit can be placed to a more distant points relative to the monitored material. This may allow much smaller windows and even the possibility to avoid the use of windows in front of the monitoring unit.

According to a possibility, instead of use of glass windows or the like, the optical monitoring unit can be provided with a viewing opening while positive air pressure is arranged inside the optical monitoring unit casing so that air flowing out of the viewing opening stops dust entering the casing. An advantage of this is that there is no glass or similar window that may get chipped and/or smeared whilst in operation.

Adding freeform lenses in front of a light source can reduce requirement for cleaning and sorting artefact, for example dust and debris from the flow of material. The ejection system may be located very near the imaging area causing even more dust and flying objects near the optical system. These can make optical windows messy. A wipe can be needed several times per hour leading to reduced total capacity. The dust can also alter the appearance of the material to the camera. A freeform lens allows positioning of the lighting unit further from the imaging area, thereby reducing the amount of dust and matter that may land on the glass or other optical equipment. This can reduce the need of cleaning. Also, easier access to the optical equipment is provided so cleaning can be made faster, should it be needed.

The modularity of the detection unit allows more compact designs and/or more freedom in arranging the view to the material. Restrictions due to separate lighting equipment comprising multiple light sources can be mitigated. Modular designs can be tailored to be compatible for different sizes and types of machinery and processes, without the need for infill, hence reducing the footprint of the machine. A modular system may remove or reduce issues when there is a need to view over multiple regions as the difference between end and middle units can be minimised and cross talk between modules avoided. A monitoring system can be provided from compact modular units that allows views at various points and angles along the path of the material flow.

Amount of stray light that could interfere with other vision systems may be reduced or even eliminated. Better control of optical radiation can be used to mitigate optical safety issues. Increase in the effective dynamic range of the detection was noted. Flattening illumination and compensation of the reduced sensitivity of the camera at high angle may be provided. Reduced cost, complexity and energy usage may be provided.

Placement of camera close to the lens, or between lenses, can be used to lessen shadowing of images. This may give better results, especially in imaging large objects as effects shadowing can be mitigated. For example, when imaging broccoli it is possible to view inside holes etc.

It is noted that although the above detailed examples have been described with reference to certain processes, applications and machines there are several variations and modifications which may be made to the disclosed solution without departing from the scope of the present invention. In particular, the different embodiments have been described as examples. Different features from different embodiments may be combined.

The foregoing description provides by way of exemplary and non-limiting examples a full and informative description of exemplary embodiments of the invention. However, various modifications and adaptations may become apparent to those skilled in the relevant arts in view of the foregoing description, when read in conjunction with the accompanying drawings and the appended claims. All such and similar modifications of the teachings of this invention will fall within the scope of this invention.

## Claims

1. An apparatus (10) for generating image data, the apparatus comprising:
an imaging device (11) for imaging material (4) moved through an imaging area (12), and
a lighting unit for illuminating the imaging area, the lighting unit comprising a source of light (15) and a freeform lens (14) configured to refract rays of light emitted by the source of light such that uniform illumination is provided for the imaging device across the imaging area.

2. The apparatus of claim 1, wherein
the freeform lens (14) is shaped to refract illumination across the imaging area (12) such that uniform irradiance is provide across the imaging area, and/or
the freeform lens (14) is shaped to refract illumination across the imaging area (12) such that the imaging device (11) provides uniform response with optimised efficiency across the imaging area.

3. The apparatus of claim 1 or 2, wherein the freeform lens (14) is shaped to compensate for detection losses at the edge areas of view of the imaging device (11) by stronger illumination at the edge areas of the imaging area (12).

4. The apparatus of any preceding claim, wherein the imaging device and the lighting unit are mounted into a single optical monitoring unit.

5. The apparatus of any preceding claim comprising at least two lighting units, wherein the imaging device is located between the freeform lenses of the at least two lighting units.

6. The apparatus of any preceding claim, wherein the imaging device comprises a line-scan camera.

7. The apparatus of any preceding claim, wherein the lighting unit provided with the freeform lens is configured to illuminate an area having width up to 50 mm and length in the range of 150mm to 600mm when the distance from the freeform lens is in the range of 150mm to 1200mm.

8. The apparatus of any preceding claim, comprising at least one freeform lens (14) shaped to provide a sharp illumination cut-off at the extremity of the imaging area and/or at least one freeform lens (14) shaped to control illumination crosstalk with an adjacent imaging area and/or lighting unit.

9. The apparatus of any preceding claim, comprising at least two lighting units for illuminating an imaging area (12), wherein the freeform lenses of the at least two lighting units are tailored so that the sum of the illumination from the freeform lenses of the at least two lighting units produce uniform irradiance or uniform response of the imaging device across the imaging area.

10. The apparatus of any preceding claim, comprising a sorting apparatus and/or analysing apparatus (1) configured for sorting and/or analysing bulk material (4) moving through the imaging area (12) based on image data generated by the imaging device (11).

11. The apparatus of claim 10, configured to
at least one of inspect, grade, separate, reject and produce a measurement and/or quality analysis and/or product stability analysis of the material based on the image data generated by the imaging device, and/or
direct the lighting to material (4) emerging from a chute (2) or carried on a conveyor, the material (4) comprising at least one of one of organic material, raw material for food products, food products, granular polymeric material, wooden material, bulk dry commodities, waste material and/or metallic material.

12. A freeform lens (14) for illuminating an imaging area (12) of an imaging device (11) configured for generating image data of material (4) moved through the imaging area (12), wherein the freeform lens (14) is configured to refract rays of light emitted by a source of light (15) such that uniform illumination is provided for the imaging device across the imaging area.

13. The freeform lens of claim 12, comprising at least two optical elements providing at least one freeform surface and/or at least one optical element with at least one freeform surface comprising glass, plastic and/or silicone.

14. A method for optical monitoring, the method comprising:
imaging material (4) moving through an imaging area (12) by a digital imaging device (11);
emitting light (16) from at least one source of light (15); and
refracting rays of light from the at least one source of light by means of at least one freeform lens (14) to the imaging area such that uniform illumination for the imaging device is provided across the imaging area.

15. The method of claim 14, comprising guiding the light towards the imaging area (12) by the at least one freeform lens configured to refract the rays of light such that at least one of:
illumination is refracted across the imaging area (12) such that uniform irradiance is provide across the imaging area;
illumination is refracted across the imaging area (12) such that the imaging device (11) provides uniform response with optimised efficiency across the imaging area;
a sharp cut-off of the illumination at the extremity of the imaging area is provided;
illumination crosstalk with an adjacent imaging area is controlled; and/or
at least two lighting units provide a single uniform illumination area.
